(19) Europäisches Patentamt / European Patent Office / Office européen des brevets

(11) **EP 3 808 808 B1**

(12) **EUROPEAN PATENT SPECIFICATION**

(45) Date of publication and mention of the grant of the patent: **05.04.2023 Bulletin 2023/14**

(21) Application number: **19818656.1**

(22) Date of filing: **10.06.2019**

(51) International Patent Classification (IPC):
***C08L 15/00*** $^{(2006.01)}$ ***C08C 19/25*** $^{(2006.01)}$
***C08K 3/013*** $^{(2018.01)}$ ***C08K 3/04*** $^{(2006.01)}$
***C08K 3/36*** $^{(2006.01)}$ ***C08K 5/548*** $^{(2006.01)}$
***C08L 7/00*** $^{(2006.01)}$ ***C08L 9/00*** $^{(2006.01)}$

(52) Cooperative Patent Classification (CPC):
(C-Sets available)
**C08L 9/00; C08C 19/25; C08L 15/00;**
C08K 2201/006; C08L 7/00 (Cont.)

(86) International application number:
**PCT/JP2019/022899**

(87) International publication number:
**WO 2019/240071 (19.12.2019 Gazette 2019/51)**

(54) **RUBBER COMPOSITION**

KAUTSCHUKZUSAMMENSETZUNG

COMPOSITION DE CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2018 JP 2018112034**

(43) Date of publication of application:
**21.04.2021 Bulletin 2021/16**

(73) Proprietor: **The Yokohama Rubber Co., Ltd.**
**Tokyo 105-8685 (JP)**

(72) Inventors:
- **SHINKE, Yu**
  **Hiratsuka City, Kanagawa 2548601 (JP)**
- **UENISHI, Kazuya**
  **Hiratsuka City, Kanagawa 2548601 (JP)**
- **KUROSAKA, Kaori**
  **Hiratsuka City, Kanagawa 2548601 (JP)**

(74) Representative: **Dilg, Haeusler, Schindelmann Patentanwaltsgesellschaft mbH**
**Leonrodstraße 58**
**80636 München (DE)**

(56) References cited:
**WO-A1-2014/185495**
**JP-A- 2009 287 019**
**JP-A- 2010 077 257**
**JP-A- 2018 188 598**
**JP-A- 2019 065 238**
**US-A1- 2009 137 701**
**US-A1- 2009 137 718**
**US-A1- 2013 338 296**
**US-A1- 2018 118 926**
**US-B1- 9 790 289**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
C08L 7/00, C08L 15/00, C08K 3/36, C08K 3/04,
C08K 5/548

## Description

### Technical Field

The present invention relates to a rubber composition.

### Background Art

In general, reinforcing fillers, such as carbon black and silica, are blended in a rubber composition that is used for, for example, a tire and that contains natural rubber. Meanwhile, because of interaction between reinforcing fillers, adequate characteristics (e.g. low heat build-up) may not be obtained due to aggregation of the reinforcing fillers in the rubber composition.

In such a situation, a rubber composition obtained by blending, for example, an epoxidized natural rubber to a natural rubber has been proposed (e.g. Patent Document 1).

### Citation List

### Patent Literature

Patent Document 1: JP 2010-077257 A

### Summary of Invention

### Technical Problem

When the inventors of the present invention studied a rubber composition in which an epoxidized natural rubber is blended in a natural rubber and reinforcing fillers using Patent Document 1 as a reference, it was found that dispersibility of the reinforcing fillers in the obtained rubber composition (hereinafter, "dispersibility of reinforcing fillers" is simply referred to as "dispersibility") does not necessarily satisfy the level of characteristics (e.g. low heat build-up) that is required recently.

In light of such circumstances, an object of the present invention is to provide a rubber composition exhibiting excellent dispersibility and low heat build-up when used in a rubber composition containing reinforcing fillers.

### Solution to Problem

When the inventors of the present invention studied focusing on a (synthetic) isoprene polymer, it was found that dispersibility of the reinforcing fillers can be significantly improved by allowing an isoprene polymer to have a specific functional group at a terminal and setting the viscosity of a modified isoprene polymer to a specific range.

The present invention is based on the knowledge described above, and specific configuration thereof is as follows.

(1) A rubber composition containing a modified isoprene polymer, a rubber component (besides the modified isoprene polymer), and a reinforcing filler,

the reinforcing filler containing carbon black and/or silica,
the modified isoprene polymer having a functional group having a nitrogen atom and a silicon atom at a terminal, and
a viscosity of the modified isoprene polymer being 2000 Pa·s or less. However, the viscosity is measured by using a cone and plate viscometer.

(2) The rubber composition according to (1) above, where a content of the modified isoprene polymer is from 1 to 50 parts by mass per 100 parts by mass of the rubber component.
(3) The rubber composition according to (1) or (2) above, where a content of the reinforcing filler is from 30 to 100 parts by mass per 100 parts by mass of the rubber component.
(4) The rubber composition according to any one of (1) to (3) above, where

a nitrogen adsorption specific surface area ($N_2SA$) of the silica is 140 $m^2/g$ or greater,
a CTAB adsorption specific surface area (CTAB) of the silica is 150 $m^2/g$ or greater, and

a ratio of the nitrogen adsorption specific surface area to the CTAB adsorption specific surface area is from 0.8 to 1.4.

(5) The rubber composition according to any one of (1) to (4) above, containing the silica and further containing a silane coupling agent,
a content of the silane coupling agent is from 1 to 20 mass% with respect to a content of the silica.
(6) The rubber composition according to any one of (1) to (5) above, where a molecular weight distribution of the modified isoprene polymer is 2.0 or less.
(7) The rubber composition according to any one of (1) to (6) above, where the rubber component contains a natural rubber.

Advantageous Effects of Invention

According to embodiments of the present invention, a rubber composition having excellent dispersibility and low heat build-up can be provided as described below.

Description of Embodiments

The rubber composition according to an embodiment of the present invention will be described below.
Note that in the present specification, value range indicated by using "from... to..." means the range including the former value as a lower limit value and the latter value as an upper limit value.
A rubber composition according to an embodiment of the present invention (hereinafter, also referred to as "composition according to an embodiment of the present invention") contains a modified isoprene polymer, a rubber component (besides the modified isoprene polymer), and a reinforcing filler,

the reinforcing filler containing carbon black and/or silica,
the modified isoprene polymer having a functional group having a nitrogen atom and a silicon atom at a terminal, and a viscosity of the modified isoprene polymer being 2000 Pa·s or less.

The modified isoprene polymer contained in the rubber composition according to an embodiment of the present invention is an isoprene polymer having a functional group having a nitrogen atom and a silicon atom (hereinafter, also referred to as "specific functional group") at a terminal and having a viscosity of 2000 Pa s or less.
Hereinafter, the modified isoprene polymer contained in the composition according to an embodiment of the present invention is also referred to as "specific modified IR".
It is conceived that, because the composition according to an embodiment of the present invention has such a structure, the reinforcing filler in the rubber composition exhibits excellent dispersibility.
Although the reason for this is not specifically clear, it is conceived that this is because aggregation of the reinforcing fillers can be prevented by interaction between the nitrogen atom and the silicon atom in the specific functional group contained in the specific modified IR and the reinforcing filler.
Furthermore, it is presumed that, by setting the viscosity of the specific modified IR in the specific range described above, the specific modified IR remarkably easily enters in gaps between aggregates of the reinforcing fillers, the size of the specific modified IR and the specific functional group are provided in a balanced manner, and as a result, dispersibility of the reinforcing filler is significantly improved.
The composition according to an embodiment of the present invention contains a specific modified IR and a rubber component (besides the specific modified IR) as rubbers, and the modified isoprene polymer (specific modified IR) is described in detail below.

Specific modified isoprene polymer

As described above, the specific modified IR is an isoprene polymer (modified isoprene polymer) having a functional group having a nitrogen atom and a silicon atom (specific functional group) at a terminal and having a viscosity of 2000 Pa s or less.
In an embodiment of the present invention, the specific modified IR can function as a compounding agent for a rubber composition containing reinforcing fillers.

Specific functional group

As described above, the specific modified IR has a functional group having a nitrogen atom and a silicon atom

(specific functional group) at a terminal. Note that the specific modified IR is only required to have a specific functional group at at least one terminal of the specific modified IR.

Preferred embodiment

The specific functional group is not particularly limited as long as the specific functional group is a functional group having a nitrogen atom and a silicon atom; however, from the perspective of achieving superior effects of the present invention, the nitrogen atom is preferably contained as an amino group ($-NR_2$: R is a hydrogen atom or a hydrocarbon group), and the silicon atom is preferably contained as a hydrocarbyloxysilyl group (=SiOR: R is a hydrocarbon group).
From the perspective of achieving superior effects of the present invention, the specific functional group is preferably a group represented by Formula (M) below.

[Chemical Formula 1]

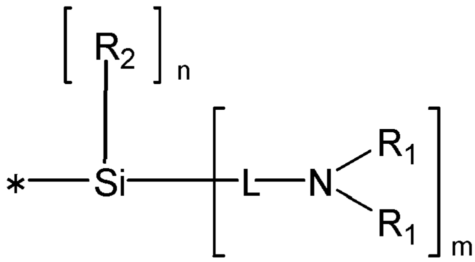

(M)

In Formula (M) above, $R_1$ and $R_2$ each independently represent a hydrogen atom or a substituent.
In Formula (M) above, L represents a divalent organic group.
The substituent is not particularly limited as long as the substituent is a monovalent substituent. Examples thereof include hydrocarbon groups that may each have a halogen atom, a hydroxy group, a nitro group, a carboxy group, an alkoxy group, an amino group, a mercapto group, an acyl group, an imide group, a phosphino group, a phosphinyl group, a silyl group, or a hetero atom.
Examples of the halogen atom include a fluorine atom, chlorine atom, bromine atom, and iodine atom.
Examples of the hetero atom of the hydrocarbon group that may have a hetero atom include an oxygen atom, nitrogen atom, sulfur atom, and phosphorous atom.
Examples of the hydrocarbon group that may have a hetero atom include aliphatic hydrocarbon groups, aromatic hydrocarbon groups, and groups that have a combination of these.
The aliphatic hydrocarbon group may be in a form of straight-chain, branched-chain, or ring. Specific examples of the aliphatic hydrocarbon group include straight-chain or branched alkyl groups (especially, those having from 1 to 30 carbons), straight-chain or branched alkenyl groups (especially, those having from 2 to 30 carbons), and straight-chain or branched alkynyl groups (especially, those having from 2 to 30 carbons).
Examples of the aromatic hydrocarbon group include aromatic hydrocarbon groups each having from 6 to 18 carbons, such as a phenyl group, a tolyl group, a xylyl group, and a naphthyl group.
In Formula (M) above, from the perspective of achieving superior effects of the present invention, $R_1$ is preferably a hydrogen atom, an alkyl group (preferably having from 1 to 10 carbons), an alkylsilyl group (preferably having from 1 to 10 carbons), or an aromatic hydrocarbon group (preferably having from 6 to 18 carbons), and more preferably a hydrogen atom.
Note that the plurality of $R_1$ moieties may be identical or different.
In a case where the plurality of $R_1$ moieties are different, from the perspective of achieving superior effects of the present invention, a combination of the plurality of $R_1$ moieties is preferably a combination of a hydrogen atom, an alkyl group (preferably having from 1 to 10 carbons), an alkylsilyl group (preferably having from 1 to 10 carbons), or an aromatic hydrocarbon group (preferably having from 6 to 18 carbons), more preferably a combination of a hydrogen atom and an alkylsilyl group (preferably having from 1 to 10 carbons), and even more preferably a combination of a hydrogen atom and a trialkylsilyl group (preferably having from 1 to 10 carbons).
From the perspective of achieving superior effects of the present invention, $R_2$ is preferably a hydrocarbyloxy group (-OR group: R is a hydrocarbon group), and more preferably an alkoxy group (preferably having from 1 to 10 carbons).
As described above, in Formula (M) above, L represents a single bond or a divalent organic group.
Examples of the divalent organic group include aliphatic hydrocarbon groups (e.g. an alkylene group, preferably

having from 1 to 10 carbons), aromatic hydrocarbon groups (e.g. an arylene group, preferably having from 6 to 18 carbons), -O-, -S-, $-SO_2-$, -N(R)- (R: alkyl group), -CO-, -NH-, -COO-, - CONH-, and groups that have a combination of these (e.g. alkyleneoxy groups ($-C_mH_{2m}O-$: m is a positive integer), alkyleneoxycarbonyl groups, and alkylenecarbonyloxy groups).

From the perspective of achieving superior effects of the present invention, L is preferably an alkylene group (preferably having from 1 to 10 carbons).

In Formula (M) above, n represents an integer of from 0 to 2.

From the perspective of achieving superior effect of the present invention, n is preferably 2.

In Formula (M) above, m represents an integer of from 1 to 3.

From the perspective of achieving superior effect of the present invention, m is preferably 1.

In Formula (M) above, n and m satisfy a relationship formula of n + m = 3.

In Formula (M) above, * indicates a bond position.

Weight average molecular weight

The weight average molecular weight (Mw) of the specific modified IR is not particularly limited as long as the viscosity of the specific modified IR is in the specific range; however, from the perspective of achieving superior effect of the present invention, the weight average molecular weight is preferably 1000000 or less, more preferably 500000 or less, even more preferably less than 100000, yet even more preferably from 1000 to 90000, particularly preferably from 2000 to 80000, and most preferably from 5000 to 50000.

Number average molecular weight

The number average molecular weight (Mn) of the specific modified IR is not particularly limited as long as the viscosity of the specific modified IR is in the specific range; however, from the perspective of achieving superior effect of the present invention, the number average molecular weight is preferably 1000000 or less, more preferably 500000 or less, even more preferably less than 100000, yet even more preferably from 1000 to 90000, particularly preferably from 2000 to 80000, and most preferably from 5000 to 50000.

Molecular weight distribution

The molecular weight distribution (Mw/Mn) of the specific modified IR is not particularly limited as long as the viscosity of the specific modified IR is in the specific range; however, from the perspective of achieving superior effect of the present invention, the molecular weight distribution is preferably 2.0 or less, more preferably 1.7 or less, even more preferably 1.5 or less, and particularly preferably 1.3 or less.

The lower limit is not particularly limited and is typically 1.0 or greater.

Note that, in the present specification, the weight average molecular weight (Mw) and the number average molecular weight (Mn) are each a value obtained by gel permeation chromatography (GPC) measurement based on calibration with polystyrene standards under the following conditions.

- Solvent: Tetrahydrofuran
- Detector: RI detector

Microstructure

1,2-Structure and 3,4-structure

In the specific modified IR, the proportion of the 1,2-structure and 3,4-structure is not particularly limited; however, from the perspective of achieving superior effect of the present invention, the proportion is preferably from 0 to 10 mol%, and more preferably from 0 to 5 mol%.

Note that the proportion of the 1,2-structure refers to a proportion (mol%) of repeating units having a 1,2-structure among repeating units derived from isoprene. Furthermore, the proportion of the 3,4-structure refers to a proportion (mol%) of repeating units having a 3,4-structure among repeating units derived from isoprene.

1,4-Trans structure

In the specific modified IR, the proportion of the 1,4-trans structure is not particularly limited; however, from the perspective of achieving superior effect of the present invention, the proportion is preferably 90 mol% or less, and more

preferably 70 mol% or less. Furthermore, in the specific modified IR, the proportion of the 1,4-trans structure is not particularly limited; however, from the perspective of achieving superior effect of the present invention, the proportion is preferably 2 mol% or greater, and more preferably 5 mol% or greater.

Note that the proportion of the 1,4-trans structure refers to a proportion (mol%) of repeating units having a 1,4-trans structure among all repeating units derived from isoprene.

1,4-cis structure

In the specific modified IR, the proportion of the 1,4-cis structure is not particularly limited; however, from the perspective of achieving superior effect of the present invention, the proportion is preferably from 10 to 98 mol%, and more preferably from 30 to 98 mol%.

Note that the proportion of the 1,4-cis structure refers to a proportion (mol%) of repeating units having a 1,4-cis structure among all repeating units derived from isoprene.

Note that, hereinafter, "total of proportions of 1,2-structure and 3,4-structure (mol%), proportion of 1,4-trans structure (mol%), proportion of 1,4-cis structure (mol%)" is also referred to as "1,2- and 3,4-/trans/cis".

Glass transition temperature

The glass transition temperature (Tg) of the specific modified IR is not particularly limited; however, from the perspective of achieving superior effect of the present invention, the glass transition temperature is preferably from -100 to -40°C, more preferably from -90 to -50°C, and even more preferably from -85 to -60°C.

Note that, in the present specification, the glass transition temperature (Tg) is measured by using a differential scanning calorimeter (DSC) at a temperature elevation speed of 10°C/min and calculated based on the midpoint method.

Viscosity

In an embodiment of the present invention, the viscosity of the specific modified IR is 2000 Pa s or less. From the perspective of achieving superior effect of the present invention, the viscosity of the specific modified IR is preferably from 0.1 to 1500 Pa·s, and more preferably from 100 to 1000 Pa·s.

An example of a preferable aspect is one in which the modified isoprene polymer is liquid at 40°C.

Furthermore, the viscosity of the isoprene polymer before modification of the specific modified IR is not particularly limited. Typically, the viscosity of the specific modified IR becomes higher than the viscosity of the isoprene before the modification. From the perspective of achieving superior effect of the present invention, the viscosity of the isoprene polymer before the modification is preferably from 0.1 to 1200 Pa·s, and more preferably from 1 to 900 Pa·s.

Furthermore, from the perspective of achieving superior effect of the present invention, the viscosity of the specific modified IR is preferably from 150 to 240% with respect to the viscosity of the isoprene polymer before the modification. Hereinafter, the viscosity of the specific modified IR after the modification with respect to the viscosity of the specific modified IR before the modification is also referred to as "viscosity (after modification/before modification)".

Note that, in the present specification, the viscosity is measured by using a cone and plate viscometer in accordance with JIS K 5600-2-3. Furthermore, the viscosity is measured at 40°C.

Note that, in general, the viscosity of a polymer may be correlated with the molecular weight of the polymer.

However, in a case where the polymer is a modified polymer, it cannot be generally said that the viscosity of the modified polymer correlates with the molecular weight of the modified polymer.

As the modified polymer, a specific modified IR will be described.

First, for example, when specific modified IRs each having an identical amount of modification at terminals by specific functional groups (degree of modification at terminals) and having a different molecular weight (which may be a number average molecular weight or weight average molecular weight, the same applies hereinafter) are compared, a specific modified IR having a smaller molecular weight has a lower viscosity than that of a specific modified IR having a larger molecular weight.

Therefore, it is conceived that a smaller molecular weight results in a lower viscosity thereof.

However, as the molecular weight becomes smaller, a concentration (e.g. concentration per 1 gram) of the specific functional group in one molecule of specific modified IR becomes higher, and thus the higher concentration of the specific functional group in a region of smaller molecular weights (e.g. weight average molecular weight of less than 100000) can contribute to increase of the viscosity of the specific modified IR.

Next, even when the molecular weights are identical, if the degrees of modification are different, a higher degree of modification of a specific functional group can contribute to increase of the viscosity of the specific modified IR.

As described above, it cannot be generally said that a smaller molecular weight of a specific modified IR results in a lower viscosity thereof.

In an embodiment of the present invention, it is conceived that the viscosity of a specific modified IR is affected by the size of the specific modified IR (weight average molecular weight or number average molecular weight) and by the modification by the specific functional group.

Method of producing specific modified IR

The method of producing the specific modified IR is not particularly limited, and a known method can be used. The method of setting the molecular weight and the molecular weight distribution to specific ranges is not particularly limited, and examples thereof include a method of adjusting, for example, a quantitative ratio of an initiator, a monomer, and a terminator, a reaction temperature, and a rate of adding the initiator.

Preferred embodiment

Examples of preferred embodiments of the method of producing the specific modified IR include a method of polymerizing isoprene using an organolithium compound and then terminating the polymerization by using an electrophile containing a nitrogen atom and a silicon atom (hereinafter, also referred to as "method according to an embodiment of the present invention"). In a case where the method according to an embodiment of the present invention is used, the resulting specific modified IR exhibits superior dispersibility, processability, toughness, low heat build-up, and wear resistance when used in a rubber composition containing reinforcing fillers.

Organolithium compound

The organolithium compound is not particularly limited, and specific examples thereof include monoorganolithium compounds, such as n-butyllithium, sec-butyllithium, tert-butyllithium, n-propyllithium, iso-propyllithium, and benzyllithium; polyfunctional organolithium compounds, such as 1,4-dilithiobutane, 1,5-dilithiopentane, 1,6-dilithiohexane, 1,10-dilithiodecane, 1,1-dilithiodiphenylene, dilithiopolybutadiene, dilithiopolyisoprene, 1,4-dilithiobenzene, 1,2-dilithio-1,2-diphenylethane, 1,4-dilithio-2-ethylcyclohexane, 1,3,5-trilithiobenzene, and 1,3,5-trilithio-2,4,6-triethylbenzene. Among these, from the perspective of achieving superior effect of the present invention, monoorganolithium compounds such as n-butyllithium, sec-butyllithium, and tert-butyllithium are preferred.

The used amount of the organolithium compound is not particularly limited, and is preferably from 0.001 to 10 mol% with respect to the amount of isoprene from the perspective of achieving superior effect of the present invention.

Polymerization of isoprene

The method of polymerizing isoprene using an organolithium compound is not particularly limited, and examples thereof include a method of adding the organolithium compound described above in an organic solvent solution containing isoprene and agitating in a temperature range of 0 to 120°C (preferably from 30 to 100°C).

Specific electrophile

In the method according to an embodiment of the present invention, the polymerization of the isoprene is terminated by using an electrophile containing a nitrogen atom and a silicon atom (hereinafter, also referred to as "specific electrophile"). By terminating the polymerization using a specific electrophile, the modified isoprene polymer having the specific functional group at a terminal as described above can be obtained.

The specific electrophile is not particularly limited as long as the specific electrophile is a compound containing a nitrogen atom and a silicon atom; however, from the perspective of achieving superior effect of the present invention, the nitrogen atom is preferably contained as an amino group ($-NR_2$: R is a hydrogen atom or a hydrocarbon group), and the silicon atom is preferably contained as a hydrocarbyloxysilyl group (≡SiOR: R is a hydrocarbon group).

From the perspective of achieving superior effect of the present invention, the specific electrophile is preferably a silazane, and more preferably a cyclic silazane. Note that "silazane" is intended to mean a compound having a structure in which a silicon atom and a nitrogen atom are directly bonded (compound having a Si-N bond).

From the perspective of achieving superior effect of the present invention, the cyclic silazane is preferably a compound represented by Formula (S) below.

[Chemical Formula 2]

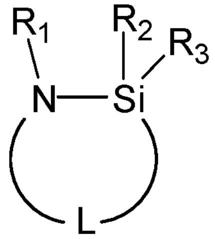

(S)

In Formula (S) above, $R_1$ to $R_3$ each independently represent a hydrogen atom or a substituent. The specific examples and preferred forms of the substituent are identical to those of $R_1$ and $R_2$ in Formula (M) described above.
In Formula (S) above, L represents a divalent organic group. The specific examples and preferred forms of the divalent organic group are identical to those of L in Formula (M) described above.
In Formula (S) above, from the perspective of achieving superior effect of the present invention, $R_1$ is preferably an alkyl group (preferably having from 1 to 10 carbons), an alkylsilyl group (preferably having from 1 to 10 carbons), or an aromatic hydrocarbon group (preferably having from 6 to 18 carbons), and more preferably an alkylsilyl group.
In Formula (S) above, from the perspective of achieving superior effect of the present invention, $R_2$ and $R_3$ are each independently preferably a hydrocarbyloxy group (-OR group: R is a hydrocarbon group), and more preferably an alkoxy group (preferably having from 1 to 10 carbons).
In Formula (S) above, from the perspective of achieving superior effect of the present invention, L is preferably an alkylene group (preferably having from 1 to 10 carbons, more preferably from 2 to 8 carbons, and even more preferably from 3 to 5 carbons).
Examples of the compound represented by Formula (S) above include N-n-butyl-1,1-dimethoxy-2-azasilacyclopentane, N-phenyl-1,1-dimethoxy-2-azasilacyclopentane, N-trimethylsilyl-1,1-dimethoxy-2-azasilacyclopentane, and N-trimethylsilyl-1,1-diethoxy-2-azasilacyclopentane.
Note that it is conceived that the silicon atom of the cyclic silazane exhibits electrophilicity.
The amount of the specific electrophile with respect to the amount of the organolithium compound is not particularly limited; however, from the perspective of achieving superior effects of the present invention, the amount, in terms of molar ratio, is preferably from 0.1 to 10, and more preferably from 1 to 5.

Content of specific modified IR

From the perspective of achieving superior effects of the present invention, the content of the specific modified IR is preferably from 1 to 50 parts by mass per 100 parts by mass of the rubber component.
From the perspectives of achieving superior effects of the present invention and achieving dispersibility and low heat build-up in a well-balanced manner, the content of the specific modified IR is preferably from 1 to 40 parts by mass, and more preferably from 3 to 15 parts by mass, per 100 parts by mass of the rubber component.
From the perspectives of achieving superior effects of the present invention, the content of the specific modified IR is preferably 7 parts by mass or greater, more preferably 12 parts by mass or greater, and even more preferably 15 parts by mass or greater, per 100 parts by mass of the rubber component.
From the perspective of improving stress at break and elongation at break, the content of the specific modified IR is preferably 8 parts by mass or less per 100 parts by mass of the rubber component.

Rubber component

The rubber component contained in the composition according to an embodiment of the present invention is not particularly limited as long as the specific modified IR is excluded.
From the perspective of achieving superior effect of the present invention, the rubber component is preferably a diene rubber. Specific examples of the diene rubber include natural rubber (NR), isoprene rubber (IR), butadiene rubber (BR), styrene-butadiene rubber (SBR), acrylonitrile-butadiene copolymer rubber (NBR), butyl rubber (IIR), halogenated butyl rubber (Br-IIR, Cl-IIR), and chloroprene rubber (CR). Among these, from the perspective of achieving superior effect of the present invention, natural rubber, SBR, or BR is preferred, and natural rubber is more preferred.
Because the basic skeleton of the specific modified IR is an isoprene polymer, the specific modified IR can function as a compounding agent for a rubber component such as natural rubber that can be contained in a rubber composition. By using the specific modified IR for a rubber component such as natural rubber as described above, excellent dispersibility of the reinforcing filler in the rubber composition can be achieved.

The natural rubber is not particularly limited. Examples of the method include a known method.

The content (styrene unit content) of the styrene unit (repeating unit derived from styrene) of the SBR is not particularly limited; however, from the perspective of achieving superior effect of the present invention, the content is preferably from 5 to 50 mass%.

Furthermore, the proportion of the vinyl structure of the SBR is not particularly limited; however, from the perspective of achieving superior effect of the present invention, the proportion is preferably from 5 to 80%, more preferably from 10 to 75%, and even more preferably from 20 to 70%. Note that the proportion of the vinyl structure refers to a proportion (mol%) of repeating units having a vinyl structure among repeating units derived from butadiene.

A single rubber component can be used, or a combination of two or more rubber components can be used.

In a case where a combination of two or more types of rubber components is used, from the perspective of achieving superior effects of the present invention, as the combination, a combination of natural rubber and SBR or BR is preferred, and a combination of natural rubber and BR is more preferred.

Weight average molecular weight

The weight average molecular weight (Mw) of the rubber component is not particularly limited; however, from the perspective of achieving superior effect of the present invention, the weight average molecular weight is preferably from 100000 to 10000000, more preferably from 200000 to 3000000, and even more preferably from 300000 to 1500000.

Furthermore, the number average molecular weight (Mn) of the rubber component is not particularly limited; however, from the perspective of achieving superior effect of the present invention, the number average molecular weight is preferably from 50000 to 5000000, more preferably from 100000 to 1500000, and even more preferably from 150000 to 750000.

In a case where such other rubber component contains two or more types of rubber components, preferably, the Mw and/or Mn of at least one type of rubber component contained in such other rubber component is in the ranges described above, and more preferably, the Mw and/or Mn of all types of rubber components contained in such other rubber component are in the ranges described above.

The measurement method of the weight average molecular weight is as described above.

Glass transition temperature

The glass transition temperature (Tg) of the rubber component is not particularly limited; however, from the perspective of achieving superior effect of the present invention, the glass transition temperature is preferably -80°C or higher, more preferably -70°C or higher, and even more preferably -60°C or higher. The upper limit is not particularly limited; however, from the perspective of achieving superior effect of the present invention, the upper limit is preferably 0°C or lower, and more preferably -20°C or lower. The measurement method of the Tg is as described above.

Note that, in a case where the rubber component is an oil extended product, the glass transition temperature of the rubber component is the glass transition temperature of the rubber component in a state in which an oil-extending component (oil) is not contained. Furthermore, in a case where the rubber component contains two or more types of rubber components, the glass transition temperature of the rubber component is an average glass transition temperature. Note that the average glass transition temperature is a sum of glass transition temperatures of the rubber components each multiplied by a mass fraction of each of the rubber component (weighted average value of glass transition temperatures), and a total of mass fractions of all rubber components is taken as 1.

Reinforcing filler

In an embodiment of the present invention, the reinforcing filler contained in the composition according to an embodiment of the present invention contains silica and/or carbon black.

In the composition according to an embodiment of the present invention, the content of the reinforcing filler is not particularly limited; however, from the perspective of achieving superior effect of the present invention, the content is preferably from 30 to 200 parts by mass, more preferably from 30 to 100 parts by mass, and even more preferably from 50 to 100 parts by mass, per 100 parts by mass of the rubber component described above.

Note that, in a case where the composition according to an embodiment of the present invention contains two or more types of reinforcing fillers, the content of the reinforcing fillers means the total content.

Silica

From the perspective of achieving superior effects of the present invention, the composition according to an embodiment of the present invention preferably contains silica as the reinforcing filler.

The silica is not particularly limited, and any known silica can be used.

Examples of the silica include wet silica, dry silica, fumed silica, and diatomaceous earth. One type of the silica may be used alone, or two or more types of the silicas may be used in combination.

The nitrogen adsorption specific surface area ($N_2SA$) of the silica is not particularly limited; however, from the perspective of achieving superior effect of the present invention, the nitrogen adsorption specific surface area is preferably from 140 $m^2/g$ or greater, and more preferably 194 $m^2/g$ or greater. The upper limit of the $N_2SA$ of the silica is not particularly limited; however, from the perspective of achieving superior effect of the present invention, the upper limit is preferably 300 $m^2/g$ or less.

Note that $N_2SA$ is an alternative characteristic of the surface area that can be used for adsorption of the rubber molecules by the silica, and is an amount of the nitrogen adsorption on the silica surface measured in accordance with JIS K 6217-2:2001 (Part 2: Determination of specific surface area - Nitrogen adsorption methods - Single-point procedures).

The cetyltrimethylammonium bromide (CTAB) adsorption specific surface area (hereinafter, "CTAB adsorption specific surface area" may be also simply referred to as "CTAB") of the silica is not particularly limited but is preferably 150 $m^2/g$ or greater, and more preferably 185 $m^2/g$ or greater, from the perspective of achieving superior effect of the present invention. The upper limit of the CTAB of the silica is not particularly limited; however, from the perspective of achieving superior effect of the present invention, the upper limit is preferably 300 $m^2/g$ or less.

Note that the CTAB adsorption specific surface area is a value of the amount of CTAB adsorbed to the surface of silica measured in accordance with JIS K6217-3:2001 "Part 3: Determination of specific surface area - CTAB adsorption method".

The ratio of the nitrogen adsorption specific surface area of the silica to the CTAB adsorption specific surface area of the silica ($N_2SA$/CTAB) is not particularly limited but is preferably from 0.8 to 1.4 from the perspective of achieving superior effect of the present invention.

In the composition according to an embodiment of the present invention, the content of the silica is not particularly limited; however, from the perspective of achieving superior effect of the present invention, the content is preferably from 10 to 150 parts by mass, and more preferably from 30 to 100 parts by mass, relative to 100 parts by mass of the rubber component described above.

Carbon black

From the perspective of achieving superior effects of the present invention, the composition according to an embodiment of the present invention preferably contains carbon black as the reinforcing filler. As the carbon black, one type of the carbon black may be used alone, or two or more types of the carbon blacks may be used in combination.

The carbon black is not particularly limited, and for example, carbon blacks of various grades, such as SAF-HS, SAF, ISAF-HS, ISAF, ISAF-LS, IISAF-HS, HAF-HS, HAF, HAF-LS, FEF, GPF, and SRF, can be used.

The nitrogen adsorption specific surface area ($N_2SA$) of the carbon black is not particularly limited, but is preferably from 50 to 200 $m^2/g$ and more preferably from 70 to 150 $m^2/g$, from the perspective of achieving superior effects of an embodiment of the present invention.

Note that the nitrogen adsorption specific surface area ($N_2SA$) is a value of the amount of nitrogen adsorbed to the surface of carbon black, measured in accordance with JIS K6217-2:2001 "Part 2: Determination of specific surface area - Nitrogen adsorption methods - Single-point procedures".

In the composition according to an embodiment of the present invention, the content of the carbon black is not particularly limited; however, from the perspective of achieving superior effects of the present invention, the content is preferably from 1 to 100 parts by mass, and more preferably from 2 to 30 parts by mass, relative to 100 parts by mass of the rubber component described above.

Silane coupling agent

The composition according to an embodiment of the present invention preferably further contains a silane coupling agent from the perspective of achieving superior effects of the present invention. One type of the silane coupling agent may be used alone, or two or more types of the silane coupling agents may be used in a combination.

In a case where the composition according to an embodiment of the present invention contains the silica as the reinforcing filler, an example of a preferable aspect is one in which the composition according to an embodiment of the present invention further contain a silane coupling agent.

The silane coupling agent is not particularly limited as long as the silane coupling agent is a silane compound having a hydrolyzable group and an organic functional group.

The hydrolyzable group is not particularly limited, and examples thereof include alkoxy groups, phenoxy groups, carboxyl groups, and alkenyloxy groups. Among these, alkoxy groups are preferable. When the hydrolyzable group is

an alkoxy group, the number of carbon atoms of the alkoxy group is preferably from 1 to 16, and more preferably from 1 to 4. Examples of the alkoxy group having from 1 to 4 carbons include a methoxy group, an ethoxy group, and a propoxy group.

The organic functional group is not particularly limited but is preferably a group that can form a chemical bond with an organic compound, and examples thereof include an epoxy group, a vinyl group, an acryloyl group, a methacryloyl group, an amino group, a sulfide group, and a mercapto group. Among these, a sulfide group and a mercapto group are preferred.

The silane coupling agent is preferably a sulfur-containing silane coupling agent.

Specific examples of the silane coupling agent include bis(3-(triethoxysilyl)propyl)tetrasulfide, bis(3-(trimethoxysilyl)propyl)tetrasulfide, bis(3-(triethoxysilyl)propyl)disulfide, mercaptopropyltrimethoxy silane, mercaptopropyltriethoxysilane, 3-trimethoxysilylpropyl-N,N-dimethylthiocarbamoyl-tetrasulfide, trimethoxysilylpropyl-mercaptobenzothiazole tetrasulfide, triethoxysilylpropyl-methacrylate-monosulfide, and dimethoxy methylsilylpropyl-N,N-dimethylthiocarbamoyl-tetrasulfide. One type of these may be used alone, or two or more types of these may be used in a combination.

In the composition according to an embodiment of the present invention, the content of the silane coupling agent is not particularly limited; however, from the perspective of achieving superior effects of the present invention, the content is preferably from 1 to 20 mass%, and more preferably from 5 to 20 mass%, relative to the content of the silica described above.

Other components

The composition according to an embodiment of the present invention may further contain another component besides the components described above (optional component) as necessary within the scope that does not impair the effect or purpose thereof.

Examples of such a component include various additives that are typically used in rubber compositions, such as terpene resins (preferably aromatic modified terpene resins), thermally expanding microcapsules, zinc oxide (flower of zinc), stearic acid, anti-aging agents, waxes, processing aids, oils, liquid polymers, thermosetting resins, vulcanizing agents (e.g. sulfur), and vulcanization accelerators.

Application

The composition according to an embodiment of the present invention is suitably used for, for example, a tire, a conveyor belt, a hose, a vibration isolating material, a rubber roll, and an outside hood for a railway vehicle. Among these, the composition is suitably used for a tire.

Examples

An embodiment of the present invention will be described in further detail below by way of examples. However, an embodiment of the present invention is not limited to these examples.

Synthesis Example

As described below, comparative modified IR and specific modified IRs 1 to 5 were synthesized.

Note that the specific modified IRs 1 to 5 each have a functional group represented by Formula (m1) described below, which corresponds to the specific functional group, at a terminal and have a viscosity of 2000 Pa·s or less, and thus correspond to the "specific modified IR" described above. On the other hand, the comparative modified IR has a viscosity of greater than 2000 Pa s although a specific functional group is contained at a terminal, and thus the comparative modified IR does not correspond to "specific modified IR" described above.

Comparative modified IR

To a cyclohexane (4.0 kg) mixed solution of isoprene (708 g, 10.4 mmol), n-BuLi (available from Kanto Chemical Co., Inc.; 1.60 mol/L (hexane solution), 51 mL, 82 mmol) was added and agitated at 50°C for 6 hours. After the reaction, N-trimethylsilyl-1,1-dimethoxy-2-azasilacyclopentane (structure below) (60 mL, 246 mmol) was charged, and the polymerization was terminated. The obtained solution was taken out and concentrated under reduced pressure. The concentrated solution was poured into methanol (5.0 L) to separate a methanol-insoluble component.

[Chemical Formula 3]

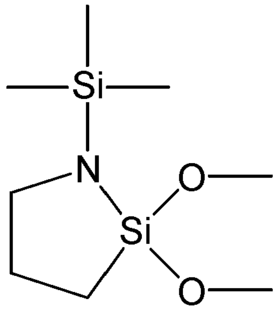

As a result, a modified IR (comparative modified IR) having a functional group represented by Formula (m1) below at a terminal (viscosity: 2100 Pa·s; Mn: 35000, Mw: 42000, Mw/Mn: 1.21) was obtained in a yield of 92%. Note that, by IR spectroscopy, it was estimated that 1,2- and 3,4-/trans/cis was 7/0/93. Furthermore, the Tg was -62°C. Furthermore, the viscosity (after modification/before modification) was 230%.

[Chemical Formula 4]

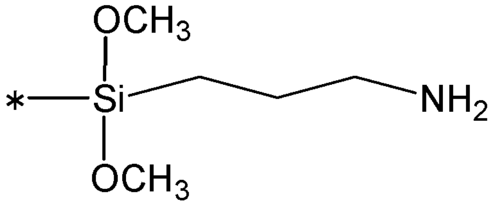

(m1)

Specific modified IR 1

To a cyclohexane (4.0 kg) mixed solution of isoprene (715 g, 10.5 mmol), n-BuLi (available from Kanto Chemical Co., Inc.; 1.60 mol/L (hexane solution), 90 mL, 144 mmol) was added and agitated at 50°C for 6 hours. After the reaction, N-trimethylsilyl-1,1-dimethoxy-2-azasilacyclopentane (60 g, 246 mmol) was charged, and the polymerization was terminated. The obtained solution was taken out and concentrated under reduced pressure. The concentrated solution was poured into methanol (5.0 L) to separate a methanol-insoluble component. As a result, a modified IR (specific modified IR 1) having a functional group represented by Formula (m1) above at a terminal (viscosity: 83 Pa s; Mn: 18000, Mw: 20000, Mw/Mn: 1.11) was obtained in a yield of 97%. Note that, by IR spectroscopy, it was estimated that 1,2- and 3,4-/trans/cis was 8/0/92. Furthermore, the Tg was -63°C. Furthermore, the viscosity (after modification/before modification) was 200%.

Specific modified IR 2

Following almost the same procedure as for the specific modified IR 1, a modified IR (specific modified IR 2) having a functional group represented by Formula (m1) above at a terminal (viscosity: 203 Pa s; Mn: 19000, Mw: 22000, Mw/Mn: 1.14) was obtained in a yield of 97%. Note that, by IR spectroscopy, it was estimated that 1,2- and 3,4-/trans/cis was 7/0/93. Furthermore, the Tg was - 62°C.

Specific modified IR 3

Following almost the same procedure as for the specific modified IR 1, a modified IR (specific modified IR 3) having a functional group represented by Formula (m1) above at a terminal (viscosity: 12.7 Pa·s; Mn: 15900, Mw: 16800, Mw/Mn: 1.06) was obtained in a yield of 97%. Note that, by IR spectroscopy, it was estimated that 1,2- and 3,4-/trans/cis was 3/0/97. Furthermore, the Tg was -66°C.

Specific modified IR 4

Following almost the same procedure as for the specific modified IR 1, a modified IR (specific modified IR 4) having a functional group represented by Formula (m1) above at a terminal (viscosity: 119 Pa·s; Mn: 38700, Mw: 44500, Mw/Mn: 1.15) was obtained in a yield of 97%. Note that, by IR spectroscopy, it was estimated that 1,2- and 3,4-/trans/cis was 6/0/94. Furthermore, the Tg was - 63°C.

Specific modified IR 5

Following almost the same procedure as for the specific modified IR 1, a modified IR (specific modified IR 3) having a functional group represented by Formula (m1) above at a terminal (viscosity: 1043 Pa·s; Mn: 74200, Mw: 86500, Mw/Mn: 1.17) was obtained in a yield of 97%. Note that, by IR spectroscopy, it was estimated that 1,2- and 3,4-/trans/cis was 5/0/95. Furthermore, the Tg was -66°C.

Preparation of rubber composition

The components shown in Table 1, Table 2, and Table 3 below were compounded in the proportions (part by mass) shown in the same tables below.

Specifically, the components shown in Table 1, Table 2, and Table 3 below except for the sulfur and the vulcanization accelerators were first mixed in a Bunbury mixer at 80°C for 5 minutes. Thereafter, a roll was used to mix the sulfur and the vulcanization accelerators into the mixture, and thus a rubber composition was obtained.

Evaluation

The following evaluations were performed for each of the obtained rubber compositions. The results are shown in Table 1, Table 2, and Table 3.

Dispersibility

A vulcanized rubber sheet was prepared by press-vulcanizing each of the obtained (unvulcanized) rubber compositions in a mold (15 cm × 15 cm × 0.2 cm) at 148°C for 30 minutes.

Then, for the produced vulcanized rubber sheet, by using a strain shear stress measurement machine (RPA2000, Alpha Technology), a strain shear modulus G' at a strain of 0.28% and a strain shear modulus G' at a strain of 30.0% were measured, and the difference G' 0.28 (MPa) - G' 30.0 (MPa) was calculated as Payne effect.

A smaller value of the difference indicates superior dispersibility of reinforcing fillers. For Table 1, the results are expressed as index values with Comparative Example 1 being assigned the index value of 100. For Table 2, the results are expressed as index values with Comparative Example 6 being assigned the index value of 100. For Table 3, the results are expressed as index values with Comparative Example 10 being assigned the index value of 100. A case where the index value is less than 100 achieves superior dispersibility.

Low heat build-up

The loss tangent at a temperature of 60°C, tan $\delta$ (60°C), was measured for each vulcanized rubber sheet manufactured as described above using a viscoelastic spectrometer (available from Toyo Seiki Seisaku-sho, Ltd.) under the following conditions: 10% initial strain, ±2% amplitude, and 20 Hz frequency.

A smaller value of the tan $\delta$ (60°C) indicates superior low heat build-up. For Table 1, the results are expressed as index values with Comparative Example 1 being assigned the index value of 100. For Table 2, the results are expressed as index values with Comparative Example 6 being assigned the index value of 100. For Table 3, the results are expressed as index values with Comparative Example 10 being assigned the index value of 100. A case where the index value is less than 97 achieves superior low heat build-up.

Stress at break

For Table 3, for the vulcanized rubber sheet produced as described above, in accordance with JIS K 6251:2010, a dumbbell-shaped JIS No. 3 test piece (thickness: 2 mm) was punched out, and the stress at break was evaluated at a temperature of 20°C and a pulling speed of 500 mm/min.

The results are shown in Table 3. The results are expressed as index values with Comparative Example 10 being assigned the index value of 100.

Elongation at break

For Table 3, for the vulcanized rubber sheet produced as described above, in accordance with JIS K 6251:2010, a dumbbell-shaped JIS No. 3 test piece (thickness: 2 mm) was punched out, and the elongation at break was evaluated at a temperature of 20°C and a pulling speed of 500 mm/min.

The results are shown in Table 3. The results are expressed as index values with the elongation at break of

Comparative Example 10 being assigned the index value of 100.

Wear resistance

For Table 3, for the vulcanized rubber sheet produced as described above, amount of wear was measured in accordance with JIS K6264-1,2:2005 using a Lambourn abrasion tester (available from Iwamoto Seisakusho Co. Ltd.) at a temperature of 20°C and at a slip ratio of 50%. The wear resistance index value was then calculated by the following formula.

$$\text{Wear resistance index value} = (\text{amount of wear of Comparative Example 10}/\text{amount of wear of each vulcanized rubber sheet}) \times 100$$

The results are shown in Table 3. A larger index value indicates a smaller amount of wear and superior wear resistance.

[Table 1-1]

| Table 1 | Comparative Example 1 | Comparative Example 2 | Comparative Example 3 | Comparative Example 4 |
|---|---|---|---|---|
| Natural rubber | 100 | 100 | 100 | 100 |
| BR | | | | |
| Comparative modified IR | | 5 | 10 | 20 |
| Carbon black | 5 | 5 | 5 | 5 |
| Silica | 51 | 51 | 51 | 51 |
| Silane coupling agent | 5.1 | 5.1 | 5.1 | 5.1 |
| Specific modified IR 1 | | | | |
| Specific modified IR 2 | | | | |
| Specific modified IR 3 | | | | |
| Specific modified IR 4 | | | | |
| Specific modified IR 5 | | | | |
| Stearic acid | 2 | 2 | 2 | 2 |
| Processing aid | 1 | 1 | 1 | 1 |
| Anti-aging agent | 2 | 2 | 2 | 2 |
| Oil | 15 | 15 | 15 | 15 |
| Zinc oxide | 2 | 2 | 2 | 2 |
| Sulfur | 1.5 | 1.5 | 1.5 | 1.5 |
| Vulcanization accelerator CZ | 2 | 2 | 2 | 2 |
| Vulcanization accelerator DPG | 0.5 | 0.5 | 0.5 | 0.5 |
| Tg of rubber component [°C] | -62 | -62 | -62 | -62 |
| Dispersibility | 100 | 100 | 102 | 101 |
| Low heat build-up | 100 | 99 | 98 | 99 |

[Table 1-2]

| Table 1 | Example 1 | Example 2 | Example 3 | Example 4 | Example 5 | Example 6 | Example 7 | Example 8 |
|---|---|---|---|---|---|---|---|---|
| Natural rubber | 100 | 100 | 100 | 100 | 100 | 100 | 100 | 100 |
| BR | | | | | | | | |
| Comparative modified IR | | | | | | | | |
| Carbon black | 5 | 5 | 5 | 5 | 5 | 5 | 5 | 5 |
| Silica | 51 | 51 | 51 | 51 | 51 | 51 | 51 | 51 |
| Silane coupling agent | 5.1 | 5.1 | 5.1 | 5.1 | 5.1 | 5.1 | 4.08 | 4.08 |
| Specific modified IR 1 | 5 | 10 | 20 | | | | | |
| Specific modified IR 2 | | | | 5 | 10 | 20 | | |
| Specific modified IR 3 | | | | | | | 5 | 10 |
| Specific modified IR 4 | | | | | | | | |
| Specific modified IR 5 | | | | | | | | |
| Stearic acid | 2 | 2 | 2 | 2 | 2 | 2 | 2 | 2 |
| Processing aid | 1 | 1 | 1 | 1 | 1 | 1 | 1 | 1 |
| Anti-aging agent | 2 | 2 | 2 | 2 | 2 | 2 | 3 | 3 |
| Oil | 15 | 15 | 15 | 15 | 15 | 15 | | |
| Zinc oxide | 2 | 2 | 2 | 2 | 2 | 2 | 3 | 3 |
| Sulfur | 1.5 | 1.5 | 1.5 | 1.5 | 1.5 | 1.5 | 1.8 | 1.8 |
| Vulcanization accelerator CZ | 2 | 2 | 2 | 2 | 2 | 2 | 2.2 | 2.2 |
| Vulcanization accelerator DPG | 0.5 | 0.5 | 0.5 | 0.5 | 0.5 | 0.5 | 0.2 | 0.2 |
| Tg of rubber component [°C] | -62 | -62 | -62 | -62 | -62 | -62 | -66 | -68 |
| Dispersibility | 73 | 47 | 32 | 88 | 67 | 51 | 78 | 66 |
| Low heat build-up | 93 | 86 | 43 | 95 | 88 | 64 | 87 | 74 |

[Table 2-1]

| Table 2 | Comparative Example 6 | Comparative Example 7 | Comparative Example 8 | Comparative Example 9 |
|---|---|---|---|---|
| Natural rubber | 60 | 60 | 60 | 60 |
| BR | 40 | 40 | 40 | 40 |
| Comparative modified IR | | 5 | 10 | 20 |
| Carbon black | 5 | 5 | 5 | 5 |
| Silica | 51 | 51 | 51 | 51 |
| Silane coupling agent | 5.1 | 5.1 | 5.1 | 5.1 |
| Specific modified IR 1 | | | | |
| Specific modified IR 2 | | | | |
| Specific modified IR 3 | | | | |
| Specific modified IR 4 | | | | |
| Specific modified IR 5 | | | | |
| Stearic acid | 2 | 2 | 2 | 2 |
| Processing aid | 1 | 1 | 1 | 1 |
| Anti-aging agent | 2 | 2 | 2 | 2 |
| Oil | 15 | 15 | 15 | 15 |
| Zinc oxide | 2 | 2 | 2 | 2 |
| Sulfur | 1.5 | 1.5 | 1.5 | 1.5 |
| Vulcanization accelerator CZ | 2 | 2 | 2 | 2 |
| Vulcanization accelerator DPG | 0.5 | 0.5 | 0.5 | 0.5 |
| Tg of rubber component [°C] | -75 | -75 | -75 | -75 |
| Dispersibility | 100 | 103 | 101 | 102 |
| Low heat build-up | 100 | 97 | 99 | 98 |

[Table 2-2]

| Table 2 | Example 9 | Example 10 | Example 11 | Example 12 | Example 13 | Example 14 |
|---|---|---|---|---|---|---|
| Natural rubber | 60 | 60 | 60 | 60 | 60 | 60 |
| BR | 40 | 40 | 40 | 40 | 40 | 40 |
| Comparative modified IR | | | | | | |
| Carbon black | 5 | 5 | 5 | 5 | 5 | 5 |
| Silica | 51 | 51 | 51 | 51 | 51 | 51 |
| Silane coupling agent | 5.1 | 5.1 | 5.1 | 5.1 | 5.1 | 5.1 |
| Specific modified IR 1 | 5 | 10 | 20 | | | |
| Specific modified IR 2 | | | | 5 | 10 | 20 |

(continued)

| Table 2 | Example 9 | Example 10 | Example 11 | Example 12 | Example 13 | Example 14 |
|---|---|---|---|---|---|---|
| Specific modified IR 3 | | | | | | |
| Specific modified IR 4 | | | | | | |
| Specific modified IR 5 | | | | | | |
| Stearic acid | 2 | 2 | 2 | 2 | 2 | 2 |
| Processing aid | 1 | 1 | 1 | 1 | 1 | 1 |
| Anti-aging agent | 2 | 2 | 2 | 2 | 2 | 2 |
| Oil | 15 | 15 | 15 | 15 | 15 | 15 |
| Zinc oxide | 2 | 2 | 2 | 2 | 2 | 2 |
| Sulfur | 1.5 | 1.5 | 1.5 | 1.5 | 1.5 | 1.5 |
| Vulcanization accelerator CZ | 2 | 2 | 2 | 2 | 2 | 2 |
| Vulcanization accelerator DPG | 0.5 | 0.5 | 0.5 | 0.5 | 0.5 | 0.5 |
| Tg of rubber component [°C] | -75 | -75 | -75 | -75 | -75 | -75 |
| Dispersibility | 73 | 59 | 36 | 90 | 61 | 44 |
| Low heat build-up | 92 | 90 | 52 | 96 | 91 | 63 |

[Table 3]

| Table 3 | Comparative Example 10 | Example 15 | Example 16 | Example 17 | Example 18 |
|---|---|---|---|---|---|
| Natural rubber | 100 | 100 | 100 | 100 | 100 |
| BR | | | | | |
| Comparative modified IR | | | | | |
| Carbon black | 5 | 5 | 5 | 5 | 5 |
| Silica | 51 | 51 | 51 | 51 | 51 |
| Silane coupling agent | 4.08 | 4.08 | 4.08 | 4.08 | 4.08 |
| Specific modified IR 1 | | | | | |
| Specific modified IR 2 | | | | | |
| Specific modified IR 3 | | | | | |
| Specific modified IR 4 | | 5 | 10 | | |
| Specific modified IR 5 | | | | 5 | 10 |
| Stearic acid | 2 | 2 | 2 | 2 | 2 |
| Processing aid | 1 | 1 | 1 | 1 | 1 |
| Anti-aging agent | 3 | 3 | 3 | 3 | 3 |
| Oil | | | | | |
| Zinc oxide | 3 | 3 | 3 | 3 | 3 |
| Sulfur | 1.8 | 1.8 | 1.8 | 1.8 | 1.8 |
| Vulcanization accelerator CZ | 2.2 | 2.2 | 2.2 | 2.2 | 2.2 |
| Vulcanization accelerator DPG | 0.2 | 0.2 | 0.2 | 0.2 | 0.2 |
| Tg of rubber component [°C] | -63 | -63 | -63 | -66 | -66 |

(continued)

| Table 3 | Comparative Example 10 | Example 15 | Example 16 | Example 17 | Example 18 |
|---|---|---|---|---|---|
| Dispersibility | 100 | 80 | 64 | 91 | 62 |
| Low heat build-up | 100 | 96 | 86 | 98 | 86 |
| Stress at break | 100 | 105 | 92 | 105 | 104 |
| Elongation at break | 100 | 104 | 96 | 111 | 106 |
| Wear resistance | 100 | 102 | 111 | 111 | 105 |

The details of each of the components shown in Table 1, Table 2, and Table 3 above are as follows.

- Natural rubber: TSR20
- BR: Nipol BR 1220 (BR, Mw = 490000, Tg = -105°C, available from Zeon Corporation)
- Comparative modified IR: Comparative modified IR synthesized as described above (modified IR having a functional group represented by Formula (m1) at a terminal as described above, Mw = 42000, Mw/Mn = 1.21, 1,2- and 3,4-/trans/cis = 7/0/93, Tg = -62°C, viscosity = 2100 Pa·s)
- Carbon black: SEAST KH (available from Tokai Carbon Co., Ltd.)
- Silica: Zeosil Premium 200MP (silica, $N_2SA = 200\ m^2/g$, CTAB = 200 $m^2/g$, $N_2SA$/CTAB = 1.0, available from Rhodia)
- Silane coupling agent: Si69, available from Evonik Degussa Industries
- Specific modified IR 1: Specific modified IR 1 synthesized as described above (modified IR having a functional group represented by Formula (m1) at a terminal as described above, Mw = 20000, Mw/Mn = 1.11, 1,2- and 3,4-/trans/cis = 8/0/92, Tg = -63°C, viscosity = 83 Pa·s)
- Specific modified IR 2: Specific modified IR 2 synthesized as described above (modified IR having a functional group represented by Formula (m1) at a terminal as described above, Mw = 22000, Mw/Mn = 1.14, 1,2- and 3,4-/trans/cis = 7/0/93, Tg = -62°C, viscosity = 203 Pa s)
- Specific modified IR 3: Specific modified IR 3 synthesized as described above (modified IR having a functional group represented by Formula (m1) at a terminal as described above, Mw = 16800, Mw/Mn = 1.06, 1,2- and 3,4-/trans/cis = 3/0/97, Tg = -66°C, viscosity = 12.7 Pa·s)
- Specific modified IR 4: Specific modified IR 4 synthesized as described above (modified IR having a functional group represented by Formula (m1) at a terminal as described above, Mw = 44500, Mw/Mn = 1.15, 1,2- and 3,4-/trans/cis = 6/0/94, Tg = -63°C, viscosity = 119 Pa·s)
- Specific modified IR 5: Specific modified IR 5 synthesized as described above (modified IR having a functional group represented by Formula (m1) at a terminal as described above, Mw = 86500, Mw/Mn = 1.17, 1,2- and 3,4-/trans/cis = 5/0/95, Tg = -66°C, viscosity = 1043 Pa·s)
- Stearic acid: Stearic acid YR (available from NOF Corporation)
- Processing aid: Aktiplast ST (available from Rhein Chemie)
- Anti-aging agent: SANTOFLEX 6PPD (available from Soltia Europe)
- Oil: Extract No. 4S (available from Showa Shell Sekiyu K.K.)
- Zinc oxide: Zinc Oxide III (available from Seido Chemical Industry Co., Ltd.)
- Sulfur: Oil treatment sulfur (available from Karuizawa Refinery Ltd.)
- Vulcanization accelerator CZ: NOCCELER CZ-G (available from Ouchi Shinko Chemical Industrial Co., Ltd.)
- Vulcanization accelerator DPG: Soxinol D-G (available from Sumitomo Chemical Co., Ltd.)

Note that, in Table 1, Table 2, and Table 3, "Tg of rubber component" refers to "Tg of rubber component" described above.

As is clear from Table 1, compared with Comparative Examples 1 to 4 each containing no specific modified IR, Examples 1 to 8 each containing the specific modified IR exhibited superior dispersibility and low heat build-up.

From the comparison of Examples 1 to 3, Examples 4 to 6, and Examples 7 and 8, Examples 2 and 3, Examples 5 and 6, and Example 8, in which the content of the specific modified IR was 7 parts by mass or greater per 100 parts by mass of the rubber component, exhibited superior dispersibility and low heat build-up. Among these, Example 3 and Example 6, in which the content of the specific modified IR was 15 parts by mass or greater per 100 parts by mass of the rubber component, exhibited even better dispersibility and low heat build-up.

As is clear from Table 2, compared with Comparative Examples 6 to 9 each containing no specific modified IR, Examples 9 to 14 each containing the specific modified IR exhibited superior dispersibility and low heat build-up.

From the comparison of Examples 9 to 11 and Examples 12 to 14, Examples 10 and 11 and Examples 13 and

14, in which the content of the specific modified IR was 7 parts by mass or greater per 100 parts by mass of the rubber component, exhibited superior dispersibility and low heat build-up. Among these, Example 11 and Example 14, in which the content of the specific modified IR was 15 parts by mass or greater per 100 parts by mass of the rubber component, exhibited even better dispersibility and low heat build-up.

As is clear from Table 3, compared with Comparative Examples 10 containing no specific modified IR, Examples 15 to 18 each containing the specific modified IR exhibited superior dispersibility and low heat build-up.

From the comparison of Examples 15 and 16 and Examples 17 and 18, Examples 16 and 18, in which the content of the specific modified IR was 7 parts by mass or greater per 100 parts by mass of the rubber component, exhibited superior dispersibility and low heat build-up.

Furthermore, from the comparison of Examples 15 and 16 and Examples 17 and 18, Examples 15 and 17, in which the content of the specific modified IR was 8 parts by mass or less per 100 parts by mass of the rubber component, exhibited greater stress at break and elongation at break.

## Claims

**1.** A rubber composition comprising a modified isoprene polymer, a rubber component (besides the modified isoprene polymer), and a reinforcing filler,

the reinforcing filler containing carbon black and/or silica,
the modified isoprene polymer having a functional group having a nitrogen atom and a silicon atom at a terminal, and
a viscosity of the modified isoprene polymer being 2000 Pa·s or less, the viscosity being measured by using a cone and plate viscometer in accordance with JIS K 5600-2-3 at a temperature of 40°C.

**2.** The rubber composition according to claim 1, wherein a content of the modified isoprene polymer is from 1 to 50 parts by mass per 100 parts by mass of the rubber component.

**3.** The rubber composition according to claim 1 or 2, wherein a content of the reinforcing filler is from 30 to 100 parts by mass per 100 parts by mass of the rubber component.

**4.** The rubber composition according to any one of claims 1 to 3, wherein

a nitrogen adsorption specific surface area ($N_2SA$) of the silica is 140 $m^2/g$ or greater,
a CTAB adsorption specific surface area (CTAB) of the silica is 150 $m^2/g$ or greater, and
a ratio of the nitrogen adsorption specific surface area to the CTAB adsorption specific surface area is from 0.8 to 1.4.

**5.** The rubber composition according to any one of claims 1 to 4, comprising the silica and further comprising a silane coupling agent,
a content of the silane coupling agent is from 1 to 20 mass% with respect to a content of the silica.

**6.** The rubber composition according to any one of claims 1 to 5, wherein a molecular weight distribution of the modified isoprene polymer is 2.0 or less.

**7.** The rubber composition according to any one of claims 1 to 6, wherein the rubber component contains a natural rubber.

## Patentansprüche

**1.** Kautschukzusammensetzung, umfassend ein modifiziertes Isoprenpolymer, einen Kautschukbestandteil (neben dem modifizierten Isoprenpolymer) und einen verstärkenden Füllstoff,

wobei der verstärkende Füllstoff Ruß und/oder Silica enthält,
wobei das modifizierte Isoprenpolymer eine funktionelle Gruppe aufweist, die ein Stickstoffatom und ein Siliciumatom an einem Ende aufweist, und
wobei eine Viskosität des modifizierten Isoprenpolymers 2000 Pa s oder weniger beträgt, wobei die Viskosität

durch Verwenden eines Kegels und eines Plattenviskosimeters gemäß JIS K 5600-2-3 bei einer Temperatur von 40 °C gemessen wird.

2. Kautschukzusammensetzung gemäß Anspruch 1, wobei ein Gehalt des modifizierten Isoprenpolymers von 1 bis 50 Masseteile pro 100 Masseteile des Kautschukbestandteils beträgt.

3. Kautschukzusammensetzung gemäß Anspruch 1 oder 2, wobei ein Gehalt des verstärkenden Füllstoffs von 30 bis 100 Masseteile pro 100 Masseteile des Kautschukbestandteils beträgt.

4. Kautschukzusammensetzung gemäß einem der Ansprüche 1 bis 3, wobei

eine spezifische Stickstoffadsorptionsoberfläche ($N_2SA$) der Silica 140 $m^2/g$ oder mehr beträgt,
eine spezifische CTAB-Adsorptionsoberfläche (CTBA) der Silica 150 $m^2/g$ oder mehr beträgt, und
ein Verhältnis der spezifischen Stickstoffadsorptionsoberfläche zu der spezifischen CTAB-Adsorptionsoberfläche von 0,8 bis 1,4 beträgt.

5. Kautschukzusammensetzung gemäß einem der Ansprüche 1 bis 4, umfassend die Silica und ferner umfassend einen Silan-Haftvermittler,
:bf
wobei ein Gehalt des Silan-Haftvermittlers, bezogen auf einen Gehalt der Silica, von 1 bis 20 Masse-% beträgt.

6. Kautschukzusammensetzung gemäß einem der Ansprüche 1 bis 5, wobei eine Molekulargewichtsverteilung des modifizierten Isoprenpolymers 2,0 oder weniger beträgt.

7. Kautschukzusammensetzung gemäß einem der Ansprüche 1 bis 6, wobei der Kautschukbestandteil einen Naturkautschuk enthält.

## Revendications

1. Composition de caoutchouc comprenant un polymère d'isoprène modifié, un composant caoutchouc (outre le polymère d'isoprène modifié), et une charge renforçante,

la charge renforçante contenant du noir de carbone et/ou de la silice,
le polymère d'isoprène modifié ayant un groupe fonctionnel ayant un atome d'azote et un atome de silicium au niveau d'une extrémité, et
une viscosité du polymère d'isoprène modifié étant de 2 000 Pa·s ou moins, la viscosité étant mesurée à l'aide d'un viscosimètre à cône et à plaque conformément à JIS K 5600-2-3 à une température de 40 °C.

2. Composition de caoutchouc selon la revendication 1, dans laquelle une quantité du polymère d'isoprène modifié va de 1 à 50 parties en masse pour 100 parties en masse du composant caoutchouc.

3. Composition de caoutchouc selon l'une quelconque des revendications 1 à 2, dans laquelle une quantité de la charge renforçante va de 30 à 100 parties en masse pour 100 parties en masse du composant caoutchouc.

4. Composition de caoutchouc selon l'une quelconque des revendications 1 à 3, dans laquelle

une surface spécifique d'adsorption d'azote ($N_2SA$) de la silice est de 140 $m^2/g$ ou plus,
une surface spécifique d'adsorption de CTAB (CTAB) de la silice est de 150 $m^2/g$ ou plus, et
un rapport de la surface spécifique d'adsorption d'azote à la surface spécifique d'adsorption de CTAB va de 0,8 à 1,4.

5. Composition de caoutchouc selon l'une quelconque des revendications 1 à 4, comprenant la silice et comprenant en outre un agent de couplage silane,
:bf
et une teneur de l'agent de couplage silane est de 1 à 20 % en masse par rapport à la teneur de la silice.

6. Composition de caoutchouc selon l'une quelconque des revendications 1 à 5, dans laquelle une distribution de

poids moléculaire du polymère d'isoprène modifié est de 2,0 ou moins.

**7.** Composition de caoutchouc selon l'une quelconque des revendications 1 à 6, dans laquelle le composant de caoutchouc contient un caoutchouc naturel.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010077257 A